# EUROPEAN PATENT SPECIFICATION

(11) **EP 4 404 472 B1**
(45) Date of publication and mention of the grant of the patent: **25.11.2026**
(21) Application number: 23152354.9
(22) Date of filing: 19.01.2023
(51) Int. Cl.: H04B 3/54

(54) **COMMUNICATION CHANNEL FREQUENCY DETERMINATION METHOD AND CENTRAL CONTROL DEVICE**
KOMMUNIKATIONSKANALFREQUENZBESTIMMUNGSVERFAHREN UND ZENTRALE STEUERUNGSVORRICHTUNG
PROCÉDÉ DE DÉTERMINATION DE FRÉQUENCE DE CANAL DE COMMUNICATION ET DISPOSITIF DE COMMANDE CENTRAL

(43) Date of publication of application: 24.07.2024
(73) Proprietor: Tridonic GmbH & Co. KG, 6851 Dornbirn (AT); Zumtobel Lighting GmbH, 6850 Dornbirn (AT)
(72) Inventor: Dervishoski, Shaban, 6850 Dornbirn (AT); Stadler, Christoph, 6850 Dornbirn (AT); Amann, Günter, 6850 Dornbirn (AT)
(74) Representative: Thun, Clemens

(56) References cited:
- US-A1- 2016 360 533

## Description

The invention relates to a control device for controlling at least one participant of at least one lighting subsystem, whereas an ideal communication channel frequency is to be determined via a respective determination method. The central control device hereby preferably controls the respective participants of at least one lighting subsystem and supplies power thereto via powerline communication, PLC.

Such central control devices are usually connected to at least one lighting subsystem and preferably some sort of power supply, such as a mains power and/or an emergency power supply, which may be a battery or other electric energy storage devices, ensuring a desired operability of the respective participants of the at least one lighting subsystem.

To ensure a respective operability the central control device somehow communicates with the respective participants of the at least one lighting subsystem, whereas depending on the respective situation and circumstances of the connection of the respective participants of the at least one lighting subsystem and the central control device different communication channels may be ideal for communication.

This leads to the situation that the respective circumstances of the lighting subsystem structure, such as number of participants, spatial extent of the lighting subsystem, communication type used, has an influence on the frequency to be preferred in each case for communication with the participants of the at least one lighting subsystem.

The US 2016/0360533 A1 discloses a repeater device having a first coupler to extract downstream channel signals from first guided electromagnetic waves bound to a transmission medium of a guided wave communication system. An amplifier amplifies the downstream channel signals to generate amplified downstream channel signals. A channel selection filter selects one or more of the amplified downstream channel signals to wirelessly transmit to the at least one client device via an antenna. A second coupler guides the amplified downstream channel signals to the transmission medium of the guided wave communication system to propagate as second guided electromagnetic waves.

Thus, the invention is concerned with the task of providing a central control device and a method for such a device, to determine a communication channel frequency to be used, in particular for systems in which communication between the central control device and the respective participants of the at least one lighting subsystem takes place by means of PLC.

According to the invention a communication channel frequency determination method for determining a communication channel frequency to be used by a central control device for communicating with at least one participant of a respective lighting subsystem is provided. Hereby the central control device comprises at least one subsystem interface, for connecting with a lighting subsystem, whereas a respective subsystem interface is connected with the respective lighting subsystem via a respective link, whereby the central control device has frequency-candidates, whereas the frequency-candidates are frequencies potentially usable as the communication channel frequency. Further, the respective lighting subsystem comprises at least one participant, such as a luminaire or an other electronic device, whereby the at least one participant is connected to the central control device with the respective subsystem interface via the respective link, and whereby the at least one participant is configured to receive and send communication signals via the respective link to the central control device. The method for determining the communication channel frequency hereby comprises the following steps performed by the central control device:
a) selecting at least two frequency-candidates;
b) using a first frequency-candidate;
c) transmitting a request signal with the respective frequency to the respective lighting subsystem via the respective subsystem interface;
d) waiting for a predetermined waiting period for feedback signals from the participants of the respective subsystem;
e) after waiting for the predetermined waiting period:
   evaluating the received feedback signals with regard to the criteria: number of participants fed back and transmission quality;
f) changing the respective frequency and using an other frequency-candidate;
g) repeating the method steps c) to f) with regard to the respectively used frequency-candidate and each time subsequently with each of the other remaining frequency-candidates;
h) comparing the individual evaluations obtained of the feedback signals received for each frequency-candidate;
i) selecting the frequency-candidate, which has the largest number of received feedback signals fed back by the respective participants as the communication channel frequency, whereby if the number of participants fed back is equal, the frequency with the better transmission quality is selected.

With such a method, the largest possible number of participants within a lighting subsystem is automatically found for control by the central control device. Here the transmission signal quality is secondary, since this characteristic is better manageable, and such a problem can be solved or bypassed in a simpler way, in comparison to the problem of a small number of participants. Here, it is relevant that the central control device has/knows potential frequency-candidates and tests them one after the other for the respective lighting subsystem. However, it is still possible that not all devices in the lighting subsystem are reached as participants, but the largest possible number of them. This is especially relevant in context of a preferred PLC between the central control device and the respective lighting subsystem(s) respectively the corresponding participant(s).

Further, the central control device itself performing the herein disclosed method steps is also subject to the claims, whereas various configurations of the central control device are conceivable.

Furthermore, it is to be mentioned that the method presented herein is used in relation of the central control device to each of its individual connected lighting subsystems. In particular, it is conceivable that several such lighting subsystems are connected to a single central control device and are controlled via it, whereby the ideal communication channel frequency to be used can be determined individually for each of these lighting subsystems with the method presented. For the purposes of this application, the combination of central control device and the respected lighting subsystem(s) connected thereto is referred to as a lighting system.

Such a lighting system comprises:
- the central control device according to anyone of the embodiments presented herein; and
- at least one lighting subsystem, connected with a respective subsystem interface of the central control device via a respective link, whereas the at least one subsystem comprises at least one participant, such as a luminaire or an other electronic device.

Whereas in such a lighting system the central control device is configured to determine, preferably individually and independently, for each of the at least one lighting subsystems connected to the central control device the to be used communication channel frequency according to any one of the embodiments presented herein. The such configured lighting system is particularly easy, efficient, fast and reliably configured with regard to the to be used communication signal frequency and such with regard to the communication channel itself.

Optionally after selecting the communication channel frequency the selected communication channel frequency is communicated to the participants of the respective lighting subsystem via the respective subsystem interface by the central control device. This eases further communication between the respective devices, whereas in particular the participants of the respective lighting subsystem are then focused on receiving communication signals via the selected communication channel frequency, such that an easier, quicker and more efficient communication between the central control device and the respective participants of the respective lighting subsystem is achieved.

Optionally the feedback signals fed back by the participants of the respective lighting subsystem contain information regarding the identity of the participant and/or information regarding the request signal, which enables an evaluation of a signal quality of the received request signal. Such an information regarding the previously sent request signal can then preferably be used by the central control device to evaluate a signal quality of the communication. The so configured feedback signals are insofar preferable as they provide the central control device with specific and useful information for the evaluation of the individual frequencies. The process steps h) and i) can therefore be carried out in a particularly meaningful, simple and fast manner.

It is to be noted that the signal quality is not evaluated by the individual participant itself and sent to the central control device (there is usually no measuring device for this in the respective participants), but is evaluated by the central control device, for example, by sending multiple requests and checking for response errors. It is also conceivable to add a respective checksum to the request signal when request signals are sent several times within a selected frequency, which then is to be returned to the central control device by the participants via the respective feedback signal. This allows the central control device to determine how many request signals were required for the respective feedback signal, and on the basis of this also the signal quality.

Optionally after the evaluating the received feedback signals the additional method step of:
- storing the evaluation obtained of the feedback signals received for the respectively used frequency-candidate;
is performed. This allows the central control device to use a once determined communication channel frequency. In particular, it is possible that the central control device uses this stored frequency for communication (for example, even after a restart of the device, or a disconnection of the device from the power supply) until the central control device has indications that the method should be performed again. Generally, such indications can be user-induced, e.g. by actuation of a switch of the central control device, or also by reception of a communication signal of a newly added participant of the respective lighting subsystem, or the like.

Optionally the central control device has three frequency-candidates pre-stored. This allows desired communication channel frequencies to be stored as frequency-candidates already during and/or after production of the central control device, so that the method for communication channel frequency determination is oriented in a particularly targeted manner to obtaining the best possible frequency. Preferably these three frequency-candidates are selected in method step a). This ensures that the same three frequencies are checked and compared with each other when the method is performed. This allows the system, or the participants of the respective lighting subsystems, and the control device to be better adapted to each other. The limitation to three potential frequency-candidates also ensures a particularly time-saving and efficient execution of the method.

Optionally the frequency-candidates are stored within a memory unit of the central control device. Thus, optionally the central control device comprises:
- a memory unit for storing data received from the internal intelligence, whereby preferably the frequency-candidates of the central control device are stored within the memory unit.

With this design of the central control device, a wide range of parameters, and in particular the selected communication channel frequency, can be stored. This eases operation of the internal intelligence and further improves efficiency of performing the presented method.

Optionally the central control device has an internal intelligence, which is configured to perform and/or initiate the communication channel frequency determination method. Thus, optionally the central control device further comprises:
- an internal intelligence for evaluating communication signals received via the at least one subsystem interface and generating communication signals for transmission via the at least one subsystem interface;
whereas preferably the determination of the communication channel frequency is performed by the internal intelligence. This creates a unit that can efficiently and quickly perform the method and also communicate with the respective interfaces and other components of the control device and also the respective participants of the respective lighting subsystem(s). With this implementation the central control device is designed to efficiently and quickly determine the to be used communication channel frequency.

Optionally the at least one subsystem-interface is configured to provide a supply voltage to the at least one connected lighting subsystems, wherein the central control device is further preferably configured to communicate with the at least one connected lighting subsystem via PLC by modulating respective communication signals on the supplied power. Thus, optionally the communication between the central control device and the at least one connected lighting subsystem is performed via PLC. With this a particular easy and efficient communication method is achieved, whereas simultaneously the connected lighting subsystems are supplied with power, such that preferably no extra power connection is necessary.

Optionally when a frequency-candidate with low transmission quality is selected, the central control device switches to a low transmission quality compensation mode, in which further communication signals sent between the central control device and the respective lighting subsystem are sent multiple times. This is an easy and effective way to not only reach a maximum number of participants but also to ensure a correct reception of the respectively transmitted communication. With this implementation the downsides of selecting a frequency-candidate with low transmission quality is compensated.

Optionally the central control device is configured to perform the determination of the communication channel frequency individually for each of the particular connected lighting subsystems. With this implementation of the central control device, it is possible to select for each connected lighting subsystem individually the best possible frequency, possibly even in parallel, such that an utmost flexible, efficient and easy communication channel between the respective lighting subsystems and the central control device is achieved.

Optionally the central control device further comprises:
- a power supply port for connecting the central control device to at least one power supply, whereas the power supply is a AC mains power and/or a DC power supply, such as an emergency power storage device;
wherein power received via the power supply port is preferably also used for supplying power to the connected at least one lighting subsystem via the at least one subsystem interface. Hereby operation of the central control device respectively of the respective lighting (sub)system(s) is achieved.

Optionally the lighting system further comprises an own power supply, particularly preferred an emergency power storage device, such as a battery. The such configured system has a particular high safety of operation, such that even emergency lightings may be participants of a respective lighting subsystem.

The invention is explained in detail below with reference to examples of embodiments and with reference to the drawing. The figures show:
- Figure 1: Schematic illustration of an exemplary embodiment of a central control device according to the invention;
- Figure 2: Schematic illustration of an exemplary embodiment of a lighting system according to the invention, comprising an exemplary embodiment of the central control device and lighting subsystems coupled to the control device;
- Figure 3: Schematic illustration of an exemplary embodiment of the communication channel frequency determination method.

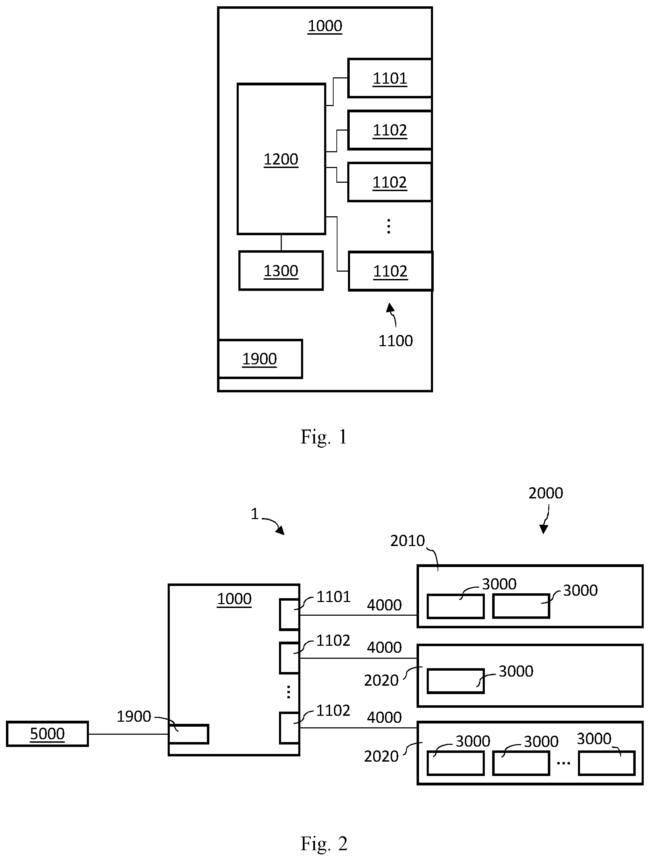

Figure 1 shows an exemplary embodiment of the central control device 1000. The illustrated embodiment of the central control device 1000 comprises an internal intelligence 1200, and a memory unit 1300 connected thereto.

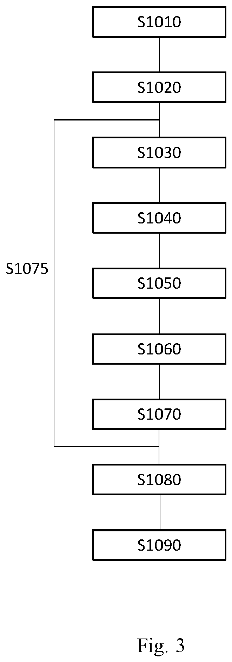

Hereby the internal intelligence 1200 is used for evaluating communication signals received via the at least one subsystem interface 1100, 1101, 1102 and generating communication signals for transmission via the at least one subsystem interface 1100, 1101, 1102. The internal intelligence 1200 is further configured to perform and/or initiate the communication channel frequency determination method - which is schematically illustrated in Figure 3 - to determine a to be used communication channel frequency.

The memory unit 1300 is used for storing data received from the internal intelligence 1200, whereby preferably the frequency-candidates of the central control device 1000 are also stored within the memory unit 1300. Thus, communication between the memory unit 1300 and the internal intelligence 1200 is given.

Further, the central control device has several subsystem interfaces 1100, 1101, 1102. Hereby, each subsystem interface 1100, 1101, 1102 can be used to connect a lighting subsystem 2000, 2010, 2020 to the central control device 1000. Any number of subsystem interfaces 1100, 1101, 1102 can be provided on the central control device 1000 as shown in Figure 1. At least one first subsystem interface 1101 and, by way of example, three further subsystem interfaces 1102 are provided.

Furthermore, the central control device 1000 comprises a power supply port 1900 for connecting the central control device 1000 to at least one power supply 5000. Hereby it may be provided, that power received via the power supply port 1900 is also used for supplying power to respective connected at least one lighting subsystem 2000, 2010, 2020 via the respective at least one subsystem interface 1100, 1101, 1102. This is especially preferred when the communication between the central control device 1000 and the at least one connected lighting subsystem 2000, 2010, 2020 is performed via PLC by modulating respective communication signals on the supplied power.

Figure 2 displays a more schematic embodiment of the central control device 1000 whereas several lighting subsystems 2000, 2010, 2020 are connected thereto via respective links 4000. Thus, the central control device 1000 controls (and preferably also supplies power) via these links 4000 to the respective lighting subsystems 2000, 2010, 2020, which are connected to the respective subsystem interfaces 1100, 1101, 1102. The amount of connected lighting subsystems 2000, 2010, 2020 connected to the central control device 1000 is limited by the number of present subsystem interfaces 1100, 1101, 1102. However, not every available subsystem interface 1100, 1101, 1102 necessarily has to be connected to a lighting subsystem 2000, 2010, 2020, such that after installation of such a central control device 1000, further lighting subsystems 2000, 2010, 2020 can also be connected subsequently, so that an existing lighting system 1 can be flexibly expanded or adapted to changed conditions.

In the illustrated embodiment shown in Figure 2 the central control device 1000 is connected to three lighting subsystems 2000, 2010, 2020, one first lighting subsystem 2010 and two further lighting subsystems 2020. Particularly the central control device 1000 is connected to the respective participants 3000 of the respective lighting subsystems 2000, 2010, 2020.

Each lighting subsystem 2000, 2010, 2020 may comprise an individual amount of participants 3000, which such as a luminaire or an other electronic device, and especially other electronic devices usually included within a lighting-system (e.g., a switch, a further controller, sensors, etc.). The first lighting subsystem 2010 hereby comprises two participants 3000, whereas the second lighting subsystem (the first further lighting subsystem 2020) comprises only one participant 3000. The third lighting subsystem (the second further lighting subsystem 2020) comprises more than three participants 3000, as indicated in Figure 2.

Hereby, the lighting system comprises the central control device 1000 and at least one lighting subsystem 2000, 2010, 2020, which is connected with a respective subsystem interface 1100, 1101, 1102 of the central control device 1000 via a respective link 4000.

Within such a lighting system 1 the central control device 1000 is configured to determine for each of the at least one lighting subsystems 2000, 2010, 2020 connected to the central control device 1000 the to be used communication channel frequency. This determination may be performed individually and independently for each lighting subsystem 2000, 2010, 2020.

To determine the communication channel frequency to be used by a central control device 1000 for communicating with at least one participant 3000 of a respective lighting subsystem 2000, 2010, 2020 a certain method is proposed herein. An embodiment of such a method and its steps is schematically illustrated in Figure 3.

The method starts with selecting at least two frequency-candidates S1010, which are potential frequencies potentially usable as the communication channel frequency. These frequency-candidates may be pre-stored in the central control device 1000, and hereby especially in the memory unit 1300. The method ideally is performed by the internal intelligence 1200.

The presented method is individually performable for each of the respectively connected lighting subsystems 2000, 2010, 2020, such that for each of the subsystems an ideal communication channel frequency is determined. Thus, the following described embodiment of the method is possibly simultaneous performed by a central control device 1000 for multiple connected lighting subsystems 2000, 2010, 2020. For the sake of brevity and conciseness, only the method for determining the communication channel frequency in relation to a corresponding connected lighting-subsystem 2000, 2010, 2020 (e.g., the first connected lighting subsystem 2010) is described below, as the method is performed in an analogous manner for any other connected lighting subsystems 2000, 2010, 2020 (e.g., the further lighting subsystems 2020).

Thus for the following description of the exemplary embodiment the spectated respective lighting subsystem 2000, 2010, 2020 is the first lighting subsystem 2010, which is connected to the first subsystem interface 1110 as the respective subsystem interface 1100, 1101, 1102 of the central control device 1000. Furthermore, reference is made to the exemplary presented lighting subsystems 2000, 2010, 2020 of Figure 2, which shall be exemplary used herein. Thus, for explanation of the method the hereon regarded respective lighting subsystem 2000, 2010, 2020 (which exemplary is the first lighting-subsystem 2010) has two participants 3000.

To describe the functionality, the method is described below in an exemplary embodiment in which three frequencies are available to the central control device 1000 pre-stored, which are selected in this first method step, S1010. In the herein described example, the three frequencies: 5,5 MHz; 6,5 MHz; 9 MHz shall be used. Of course, this method can also be carried out with more or fewer frequency-candidates, and of course with other frequencies as exemplary chosen above, whereby it should also be mentioned that the frequency-candidates do not have to be pre-stored, but can also be communicated to the central control device 1000 from outside.

In a next method step a first frequency-candidate (e.g., 5,5 MHz) from these (exemplary) three selected frequency-candidates is used, S1020.

Further, a request signal is transmitted by the central control device 1000 with the respective used selected frequency (e.g., 5,5 MHz) to the respective lighting subsystem 2010 via the respective subsystem interface 1101, S1030. Hereby, the request signal is transmitted via the respective link 4000 between the central control device 1000 and the respective participants 3000 of the respective lighting subsystem 2010. The request signal hereby requests the respective participants 3000 to identify themselves to the central control device 1000.

After the transmitting S1030, the central control device 1000 (respectively the internal intelligence 1200 of the central control device 1000) waits for a certain predetermined waiting period for feedback signals from the respective participants 3000 of the respective lighting subsystem 2010, S1040. This is important as without a predetermined waiting period the central control device 1000, would not know when to proceed with the further method steps, as it clearly cannot predict how many participants should send such a feedback signal. The predetermined waiting period is thus preferably configured to take into account the duration of receiving, generating and sending the respective signals within the lighting subsystems 2000, 2010, 2020.

After waiting S 1040 for the predetermined waiting period, the method step of evaluating the received feedback signals with regard to the criteria:
- number of participants fed back, and
- transmission quality
is performed, S1050. This step is crucial, as to later on compare the respective frequency-candidates in a meaningful way these criteria represent the overall usability of the respectively selected frequency-candidate properly. Hereby the feedback signal sent by each of the reached participant 3000 contain information concerning the identity of the respective participant 3000 and/or preferably also information regarding the previously sent request signal that was received by the respective participant, on which basis the central control device can evaluate the signal quality of the received request signal. Hereby, for evaluation purposes the transmission quality may also consider - besides the fed back information which enables an evaluation of the signal quality of the request signal communicated to the participants 3000 - the signal quality of the received feedback signals, which is determined by the central control device 1000 (respectively by the internal intelligence 1200).

In the herein considered example, it is assumed that using the first frequency-candidate 5,5 MHz out of the two possible reachable participants 3000 (see Figure 2: participants 3000 of the first lighting-subsystem 2010), all two participants 3000 received the request signal of the central control device 1000 and individually sent back the respective feedback signals. In the following example the feedback signal contained (besides the respective identities of the participants) the information for evaluating that the signal quality was normal - preferably a distinction of at least three quality tiers (low, normal, high) is made concerning the signal quality. These received feedback signals are then evaluated by the central control device 1000. Thus, the evaluation concerning the first frequency-candidate 5,5 MHz exemplary results in two reached participants 3000 and a normal transmission quality.

Preferably after evaluating these feedback signals, the central control device 1000 performs the additional method step of storing the evaluation obtained of the feedback signals received for the respectively used frequency-candidate, S1060, further preferred within the memory unit 1300 of the central control device 1000. This provides more computing capacity for further calculations and, in particular, reduces the load on the internal intelligence 1200, so that the method is performed more efficiently and its calculations can be performed more quickly. Further, in particular, this facilitates the comparison of the various frequency-candidates, since after the test of the respective frequency-candidates has been carried out (i.e. the individual frequency-candidates are run through one after the other) only the stored data are loaded and compared with each other.

Subsequently the regarded frequency is changed to an other frequency-candidate, S1070, whereas in the herein spectated example it is the turn of the second frequency-candidate (e.g., 6,5 MHz).

The above presented method steps from transmitting a request signal with the respective frequency, S1030, to the method step of changing the respective frequency, S1070, are repeated with regard to the now respectively used frequency-candidate (selected in the prior method step S1070) and each time subsequently with each of the remaining frequency-candidates, S1075.

In the herein spectated example this means, that after changing, S1070, the respective frequency to the now second frequency-candidate (i.e., 6,5 MHz), the central control device 1000 again transmits a request signal to the same respective lighting subsystem 2010 via the respective subsystem interface 1101, with this newly selected frequency. After this transmission the central control device 1000 again waits (S1040) for a predetermined waiting period for feedback signals from the respective participants 3000, and after waiting (S1040) for the predetermined waiting period the central control device 1000 evaluates (S1050) the respectively received feedback signals.

In the herein presented example by using the second frequency-candidate 6,5 MHz the central control device 1000 receives only one feedback signal (e.g., from the first participant 3000), whereas the transmission quality was evaluated as high. This evaluation may also be stored, S1060.

Now in the method step S1070 the respective frequency is changed again, whereby now the third (and in this example last) frequency-candidate (i.e., 9 MHz) is used.

As performed with regard to the first two frequency-candidates the method steps S1030 to S 1070 are repeated again, S1075.

Hereby exemplary only one feedback signal was received during the waiting period, whereas the signal quality was evaluated as low. Thus, the evaluation of the received feedback signals result in only one received feedback signal and a low transmission quality.

As all available frequency-candidates were used and evaluated, the central control device 1000 carries on with the method step of comparing the individual evaluations previously obtained, S1080. Here, the individual evaluations of the regarded frequencies are compared with each other. Thus, in the present example the first frequency-candidate (5,5 MHz) with its two received feedback signal and the evaluated normal transmission quality; and the second frequency-candidate (6,5 MHz) with its one received feedback signal and the high transmission quality; and the second frequency-candidate (9 MHz) with its one received feedback signal and the low transmission quality are compared to each other.

The outcome of this comparison, S1080, is the further method step of selecting the frequency-candidate, which has the largest number of feedback signals fed back by the respective participants 3000 as the communication channel frequency, S1090, whereby if the number of participants fed back is equal, the frequency with the better transmission quality is selected. The criterion of the number of received feedback signals - which is a measurand regarding the number of reached participants 3000 of the respective lighting subsystem 2000, 2010, 2020 - has a higher priority than the transmission quality, as a low transmission quality is easier to manage for the central control device 1000.

Thus, in this example, the first frequency-candidate with the frequency 5.5 MHz is selected as the communication channel frequency.

This would also have been the case if only a low transmission quality had been evaluated for the first frequency-candidate in the above example, since the first frequency-candidate received more feedback signals from the (different) corresponding participants 3000 than the other two frequency-candidates.

In such a case, where a frequency is selected which has only a low transmission quality, the central control device 1000 would attempt to compensate for this low transmission quality. This could be done in particular by switching to a so-called low transmission quality compensation mode of the central control device 1000, in which the respective communication signals between the control device 1000 and the respective lighting subsystem 2000, 2010, 2020, respectively its subscribers 3000, are sent more often, i.e., multiple times.

After selecting the communication channel frequency the selected communication channel frequency may additionally be communicated to the participants 3000 of the respective lighting subsystem 2000, 2010, 2020 by the central control device 1000 via the respective subsystem interface 1100, 1101, 1102. This eases further communication between the participants 3000 and the central control device 1000.

Thus, the given method improves communication within a lighting system 1, as the communication channel frequency between each of the respective available lighting subsystems 2000, 2010, 2020 and the central control device 1000 are individually determined.

Preferably, the method presented herein is not only performed when a lighting system 1 or a central control device 1000 coupled to at least one lighting subsystem 2000, 2010, 2020 is put into operation for the first time, but can (and should) be performed again whenever changes are made in a corresponding coupled lighting subsystem 2000, 2010, 2020 (e.g., changes in the type, arrangement and/or number of participants 3000), so that communication between the participants 3000 of the lighting system 1 is always individually optimized.

With regard to the above presented lighting system 1 it is to be added, that the lighting system 1 may also include the power supply 5000 which is connected to the central control device 1000, and hereby especially to the power supply port 1900 of the central control device 1000.

The power supply 5000 may be an AC and/or DC power supply, and hereby especially a mains power, or an emergency power storage device, such as a battery.

This central control device 1000 may also comprise a housing, whereas all comprised components may be included within said housing, which may also be wall mounted.

The herein described examples, optional configurations and implementations of the presented method, the presented central control device 1000 and the presented lighting system 1 each represent an individual embodiment of the respective subject matter, whereas these embodiments are compatible with each other, whereas optional or preferred features are selectively interchangeable.

In this respect, communication channel frequency determination method for determining a communication channel frequency to be used by a central control device 1000 for communicating with at least one participant 3000 of a respective lighting subsystem 2000, 2010, 2020 and respective central control device 1000 is disclosed, which improves the number of participants 3000 reached for communication and thus improves operation of such a system 1.

## Claims

1. A communication channel frequency determination method for determining a communication channel frequency to be used by a central control device (1000) for communicating with one or more participants (3000) of a respective lighting subsystem (2000, 2010, 2020);
the central control device (1000) comprising at least one subsystem interface (1100, 1101, 1102), for connecting with a lighting subsystem (2000, 2010, 2020), whereas a respective subsystem interface (1100, 1101, 1102) is connected with the respective lighting subsystem (2000, 2010, 2020) via a respective link (4000), whereby the central control device (1000) has frequency-candidates, whereas the frequency-candidates are frequencies potentially usable as the communication channel frequency;
the respective lighting subsystem (1000) comprising one or more participants (3000), such as a luminaire or an other electronic device, whereby the one or more participants (3000) are each connected to the central control device (1000) with the respective subsystem interface (1100, 1101, 1102) via the respective link (4000), and whereby the one or more participants (3000) are each configured to receive and send communication signals via the respective link (4000) to the central control device (1000);
the method comprising the following steps performed by the central control device (1000):
a) selecting (S1010) at least two frequency-candidates;
b) using (S1020) a first frequency-candidate;
c) transmitting (S1030) a request signal with the respective frequency to the respective lighting subsystem (2000, 2010, 2020) via the respective subsystem interface (1100, 1101, 1102);
d) waiting (S1040) for a predetermined waiting period for feedback signals from the one or more participants (3000) of the respective lighting subsystem (2000, 2010, 2020);
e) after waiting (S1040) for the predetermined waiting period:
evaluating (S1050) the received feedback signals with regard to the criteria: number of participants fed back and transmission quality;
f) changing (S1070) the respective frequency and using an other frequency-candidate;
g) repeating (S1075) the method steps c) to f) with regard to the respectively used frequency-candidate and each time subsequently with each of the other remaining frequency-candidates;
h) comparing (S1080) the individual evaluations obtained of the feedback signals received for each frequency-candidate;
i) selecting (S1090) the frequency-candidate, which has the largest number of received feedback signals fed back by the respective one or more participants (3000) as the communication channel frequency, whereby if the number of feedback signals received is equal, the frequency with the better transmission quality is selected.

2. A communication channel frequency determination method according to claim 1, wherein after selecting the communication channel frequency the selected communication channel frequency is communicated to the one or more participants (3000) of the respective lighting subsystem (2000, 2010, 2020) via the respective subsystem interface (1100, 1101, 1102) by the central control device (1000).

3. A communication channel frequency determination method according to claim 1 or 2, wherein the feedback signals fed back by the one or more participants (3000) of the respective lighting subsystem (2000, 2010, 2020) contain information regarding the identity of the respective participant (3000) and/or information regarding the request signal, which enables an evaluation of a signal quality of the received request signal.

4. A communication channel frequency determination method according to any one of the preceding claims,
wherein after the evaluating the received feedback signals the additional method step of:
- storing (S1060) the evaluation obtained of the feedback signals received for the respectively used frequency-candidate;
is performed.

5. A communication channel frequency determination method according to any one of the preceding claims,
wherein the central control device (1000) has three frequency-candidates pre-stored, preferably stored within a memory unit (1300) of the central control device (1000),
wherein further preferred these three frequency-candidates are selected in method step a).

6. A communication channel frequency determination method according to any one of the preceding claims,
wherein the central control device (1000) has an internal intelligence (1200), which is configured to perform and/or initiate the communication channel frequency determination method.

7. A communication channel frequency determination method according to any one of the preceding claims,
wherein the at least one subsystem-interface (1100, 1101, 1102) is configured to provide a supply voltage to the at least one connected lighting subsystems (2000, 2010, 2020), wherein the central control device (1000) is further preferably configured to communicate with the at least one connected lighting subsystem (2000, 2010, 2020) via powerline communication, PLC, by modulating respective communication signals on the supplied power.

8. A communication channel frequency determination method according to any one of the preceding claims,
wherein when a frequency-candidate with low transmission quality is selected, the central control device (1000) switches to a low transmission quality compensation mode, in which further communication signals sent between the central control device (1000) and the respective lighting subsystem (2000, 2010, 2020) are sent multiple times.

9. A central control device (1000) for controlling one or more participants (3000) of a lighting subsystem (2000, 2010, 2020), the central control device (1000) comprising at least one subsystem interface (1100, 1101, 1102), for connecting with at least one lighting subsystem (2000, 2010, 2020), whereas a respective subsystem interface (1100, 1101, 1102) is connected with a respective lighting subsystem (2000, 2010, 2020) via a respective link (4000),
whereby the central control device (1000) has frequency-candidates, whereas the frequency-candidates are frequencies potentially usable as the communication channel frequency,
whereas the central control device (1000) is adapted to determine a communication channel frequency to be used for communicating with the one or more participants (3000) of the respective lighting subsystem (2000, 2010, 2020) by performing the communication channel frequency determination method according to any one of the preceding claims.

10. A central control device according to claim 9,
wherein the central control device (1000) is configured to perform the determination of the communication channel frequency individually for each of the particular connected lighting subsystems (2000, 2010, 2020).

11. A central control device according to claim 9 or 10,
wherein the central control device (1000) further comprises:
- an internal intelligence (1200) for evaluating communication signals received via the at least one subsystem interface (1100, 1101, 1102) and generating communication signals for transmission via the at least one subsystem interface (1100, 1101, 1102);
whereas preferably the determination of the communication channel frequency is performed by the internal intelligence (1200).

12. A central control device according to claim 11,
wherein the central control device (1000) comprises:
- a memory unit (1300) for storing data received from the internal intelligence (1200), whereby preferably the frequency-candidates of the central control device (1000) are stored within the memory unit (1300).

13. A central control device according to any one of the claims 9 to 12,
wherein the central control device (1000) further comprises:
- a power supply port (1900) for connecting the central control device (1000) to at least one power supply (5000), whereas the power supply is a AC mains power and/or a DC power supply, such as an emergency power storage device;
wherein power received via the power supply port (1900) is preferably also used for supplying power to the connected at least one lighting subsystem (2000, 2010, 2020) via the at least one subsystem interface (1100, 1101, 1102).

14. A central control device according to any one of the claims 9 to 13,
wherein the communication between the central control device (1000) and the at least one connected lighting subsystem (2000, 2010, 2020) is performed via powerline communication, PLC, by modulating respective communication signals on the supplied power.

15. A lighting system comprising:
- the central control device (1000) according to any one of the claims 9 to 14;
- at least one lighting subsystem (2000, 2010, 2020), connected with a respective subsystem interface (1100, 1101, 1102) of the central control device (1000) via a respective link (4000), whereas the at least one lighting subsystem (2000, 2010, 2020) comprises one or more participant (3000), such as a luminaire or an other electronic device,
whereas the central control device (1000) is configured to determine, preferably individually and independently, for each of the at least one lighting subsystems (2000, 2010, 2020) connected to the central control device (1000) the to be used communication channel frequency according to any one of the claims 1 to 8.

## Patentansprüche

1. Verfahren zur Bestimmung einer Kommunikationskanalfrequenz zum Bestimmen einer Kommunikationskanalfrequenz, die von einer zentralen Steuervorrichtung (1000) zur Kommunikation mit einem oder mehreren Teilnehmern (3000) eines jeweiligen Beleuchtungsteilsystems (2000, 2010, 2020) zu verwenden ist;
wobei die zentrale Steuervorrichtung (1000) mindestens eine Teilsystemschnittstelle (1100, 1101, 1102) zum Verbinden mit einem Beleuchtungsteilsystem (2000, 2010, 2020) umfasst, wobei eine jeweilige Teilsystemschnittstelle (1100, 1101, 1102) über eine jeweilige Verbindung (4000) mit dem jeweiligen Beleuchtungsteilsystem (2000, 2010, 2020) verbunden ist, wobei die zentrale Steuervorrichtung (1000) Frequenzkandidaten aufweist, wobei die Frequenzkandidaten Frequenzen sind, die potenziell als die Kommunikationskanalfrequenz verwendbar sind;
wobei das jeweilige Beleuchtungsteilsystem (1000) einen oder mehrere Teilnehmer (3000), wie etwa eine Leuchte oder eine andere elektronische Vorrichtung, umfasst, wobei der eine oder die mehreren Teilnehmer (3000) jeweils über die jeweilige Verbindung (4000) mit der zentralen Steuervorrichtung (1000) mit der jeweiligen Teilsystemschnittstelle (1100, 1101, 1102) verbunden sind und wobei der eine oder die mehreren Teilnehmer (3000) jeweils dazu eingerichtet sind, über die jeweilige Verbindung (4000) Kommunikationssignale von der zentralen Steuervorrichtung (1000) zu empfangen und an diese zu senden;
wobei das Verfahren die folgenden, von der zentralen Steuervorrichtung (1000) ausgeführten Schritte umfasst:
a) Auswählen (S1010) mindestens zweier Frequenzkandidaten;
b) Verwenden (S1020) eines ersten Frequenzkandidaten;
c) Übertragen (S1030) eines Anfragesignals mit der jeweiligen Frequenz über die jeweilige Teilsystemschnittstelle (1100, 1101, 1102) an das jeweilige Beleuchtungsteilsystem (2000, 2010, 2020);
d) Warten (S1040) während einer vorgegebenen Wartezeit auf Rückmeldesignale von dem einen oder den mehreren Teilnehmern (3000) des jeweiligen Beleuchtungsteilsystems (2000, 2010, 2020);
e) nach dem Warten (S1040) während der vorgegebenen Wartezeit:
Auswerten (S1050) der empfangenen Rückmeldesignale im Hinblick auf die Kriterien Anzahl der rückmeldenden Teilnehmer und Übertragungsqualität;
f) Ändern (S1070) der jeweiligen Frequenz und Verwenden eines anderen Frequenzkandidaten;
g) Wiederholen (S1075) der Verfahrensschritte c) bis f) in Bezug auf den jeweils verwendeten Frequenzkandidaten und anschließend jeweils mit jedem der anderen verbleibenden Frequenzkandidaten;
h) Vergleichen (S1080) der einzelnen Auswertungen, die aus den für jeden Frequenzkandidaten empfangenen Rückmeldesignalen erhalten wurden;
i) Auswählen (S1090) des Frequenzkandidaten, für den die größte Anzahl von Rückmeldesignalen von dem jeweiligen einen oder den jeweiligen mehreren Teilnehmern (3000) empfangen wurde, als die Kommunikationskanalfrequenz, wobei bei gleicher Anzahl empfangener Rückmeldesignale die Frequenz mit der besseren Übertragungsqualität ausgewählt wird.

2. Verfahren zur Bestimmung einer Kommunikationskanalfrequenz nach Anspruch 1,
wobei nach dem Auswählen der Kommunikationskanalfrequenz die ausgewählte Kommunikationskanalfrequenz von der zentralen Steuervorrichtung (1000) über die jeweilige Teilsystemschnittstelle (1100, 1101, 1102) an den einen oder die mehreren Teilnehmer (3000) des jeweiligen Beleuchtungsteilsystems (2000, 2010, 2020) übermittelt wird.

3. Verfahren zur Bestimmung einer Kommunikationskanalfrequenz nach Anspruch 1 oder 2, wobei die von dem einen oder den mehreren Teilnehmern (3000) des jeweiligen Beleuchtungsteilsystems (2000, 2010, 2020) zurückgemeldeten Rückmeldesignale Informationen bezüglich der Identität des jeweiligen Teilnehmers (3000) und/oder Informationen bezüglich des Anfragesignals enthalten, die eine Auswertung einer Signalqualität des empfangenen Anfragesignals ermöglichen.

4. Verfahren zur Bestimmung einer Kommunikationskanalfrequenz nach einem der vorhergehenden Ansprüche,
wobei nach dem Auswerten der empfangenen Rückmeldesignale der zusätzliche Verfahrensschritt:
- Speichern (S1060) der aus den für den jeweils verwendeten Frequenzkandidaten empfangenen Rückmeldesignalen erhaltenen Auswertung;
ausgeführt wird.

5. Verfahren zur Bestimmung einer Kommunikationskanalfrequenz nach einem der vorhergehenden Ansprüche,
wobei in der zentralen Steuervorrichtung (1000) drei Frequenzkandidaten vorgespeichert sind, vorzugsweise in einer Speichereinheit (1300) der zentralen Steuervorrichtung (1000),
wobei weiter vorzugsweise diese drei Frequenzkandidaten im Verfahrensschritt a) ausgewählt werden.

6. Verfahren zur Bestimmung einer Kommunikationskanalfrequenz nach einem der vorhergehenden Ansprüche,
wobei die zentrale Steuervorrichtung (1000) eine interne Intelligenz (1200) aufweist, die dazu eingerichtet ist, das Verfahren zur Bestimmung einer Kommunikationskanalfrequenz auszuführen und/oder einzuleiten.

7. Verfahren zur Bestimmung einer Kommunikationskanalfrequenz nach einem der vorhergehenden Ansprüche,
wobei die mindestens eine Teilsystemschnittstelle (1100, 1101, 1102) dazu eingerichtet ist, dem mindestens einen angeschlossenen Beleuchtungsteilsystem (2000, 2010, 2020) eine Versorgungsspannung bereitzustellen, wobei die zentrale Steuervorrichtung (1000) ferner vorzugsweise dazu eingerichtet ist, mit dem mindestens einen angeschlossenen Beleuchtungsteilsystem (2000, 2010, 2020) mittels Powerline-Kommunikation, PLC, zu kommunizieren, indem jeweilige Kommunikationssignale auf die bereitgestellte Versorgung moduliert werden.

8. Verfahren zur Bestimmung einer Kommunikationskanalfrequenz nach einem der vorhergehenden Ansprüche,
wobei die zentrale Steuervorrichtung (1000), wenn ein Frequenzkandidat mit niedriger Übertragungsqualität ausgewählt wird, in einen Kompensationsmodus für niedrige Übertragungsqualität wechselt, in dem weitere zwischen der zentralen Steuervorrichtung (1000) und dem jeweiligen Beleuchtungsteilsystem (2000, 2010, 2020) gesendete Kommunikationssignale mehrfach gesendet werden.

9. Zentrale Steuervorrichtung (1000) zum Steuern eines oder mehrerer Teilnehmer (3000) eines Beleuchtungsteilsystems (2000, 2010, 2020), wobei die zentrale Steuervorrichtung (1000) mindestens eine Teilsystemschnittstelle (1100, 1101, 1102) zum Verbinden mit mindestens einem Beleuchtungsteilsystem (2000, 2010, 2020) umfasst, wobei eine jeweilige Teilsystemschnittstelle (1100, 1101, 1102) über eine jeweilige Verbindung (4000) mit einem jeweiligen Beleuchtungsteilsystem (2000, 2010, 2020) verbunden ist,
wobei die zentrale Steuervorrichtung (1000) Frequenzkandidaten aufweist, wobei die Frequenzkandidaten Frequenzen sind, die potenziell als die Kommunikationskanalfrequenz verwendbar sind,
wobei die zentrale Steuervorrichtung (1000) dazu eingerichtet ist, eine Kommunikationskanalfrequenz zu bestimmen, die zur Kommunikation mit dem einen oder den mehreren Teilnehmern (3000) des jeweiligen Beleuchtungsteilsystems (2000, 2010, 2020) zu verwenden ist, indem sie das Verfahren zur Bestimmung einer Kommunikationskanalfrequenz nach einem der vorhergehenden Ansprüche ausführt.

10. Zentrale Steuervorrichtung nach Anspruch 9,
wobei die zentrale Steuervorrichtung (1000) dazu eingerichtet ist, die Bestimmung der Kommunikationskanalfrequenz für jedes der jeweiligen angeschlossenen Beleuchtungsteilsysteme (2000, 2010, 2020) individuell auszuführen.

11. Zentrale Steuervorrichtung nach Anspruch 9 oder 10,
wobei die zentrale Steuervorrichtung (1000) ferner umfasst:
- eine interne Intelligenz (1200) zum Auswerten von über die mindestens eine Teilsystemschnittstelle (1100, 1101, 1102) empfangenen Kommunikationssignalen und zum Erzeugen von Kommunikationssignalen zur Übertragung über die mindestens eine Teilsystemschnittstelle (1100, 1101, 1102);
wobei die Bestimmung der Kommunikationskanalfrequenz vorzugsweise von der internen Intelligenz (1200) ausgeführt wird.

12. Zentrale Steuervorrichtung nach Anspruch 11,
wobei die zentrale Steuervorrichtung (1000) umfasst:
- eine Speichereinheit (1300) zum Speichern von Daten, die von der internen Intelligenz (1200) empfangen werden,
wobei die Frequenzkandidaten der zentralen Steuervorrichtung (1000) vorzugsweise in der Speichereinheit (1300) gespeichert sind.

13. Zentrale Steuervorrichtung nach einem der Ansprüche 9 bis 12,
wobei die zentrale Steuervorrichtung (1000) ferner umfasst:
- einen Stromversorgungsanschluss (1900) zum Verbinden der zentralen Steuervorrichtung (1000) mit mindestens einer Stromversorgung (5000), wobei die Stromversorgung eine Wechselstrom-Netzversorgung und/oder eine Gleichstromversorgung, wie etwa eine Notstromspeichervorrichtung, ist;
wobei über den Stromversorgungsanschluss (1900) empfangene Leistung vorzugsweise auch dazu verwendet wird, das angeschlossene mindestens eine Beleuchtungsteilsystem (2000, 2010, 2020) über die mindestens eine Teilsystemschnittstelle (1100, 1101, 1102) mit Leistung zu versorgen.

14. Zentrale Steuervorrichtung nach einem der Ansprüche 9 bis 13,
wobei die Kommunikation zwischen der zentralen Steuervorrichtung (1000) und dem mindestens einen angeschlossenen Beleuchtungsteilsystem (2000, 2010, 2020) mittels Powerline-Kommunikation, PLC, erfolgt, indem jeweilige Kommunikationssignale auf die bereitgestellte Versorgung moduliert werden.

15. Beleuchtungssystem, umfassend:
- die zentrale Steuervorrichtung (1000) nach einem der Ansprüche 9 bis 14;
- mindestens ein Beleuchtungsteilsystem (2000, 2010, 2020), das über eine jeweilige Verbindung (4000) mit einer jeweiligen Teilsystemschnittstelle (1100, 1101, 1102) der zentralen Steuervorrichtung (1000) verbunden ist, wobei das mindestens eine Beleuchtungsteilsystem (2000, 2010, 2020) einen oder mehrere Teilnehmer (3000), wie etwa eine Leuchte oder eine andere elektronische Vorrichtung, umfasst,
wobei die zentrale Steuervorrichtung (1000) dazu eingerichtet ist, für jedes der mindestens einen mit der zentralen Steuervorrichtung (1000) verbundenen Beleuchtungsteilsysteme (2000, 2010, 2020), vorzugsweise individuell und unabhängig, die zu verwendende Kommunikationskanalfrequenz gemäß einem der Ansprüche 1 bis 8 zu bestimmen.

## Revendications

1. Procédé de détermination d'une fréquence de canal de communication destiné à déterminer une fréquence de canal de communication devant être utilisée par un dispositif de commande central (1000) pour communiquer avec un ou plusieurs participants (3000) d'un sous-système d'éclairage respectif (2000, 2010, 2020) ;
le dispositif de commande central (1000) comprenant au moins une interface de sous-système (1100, 1101, 1102) destinée à être connectée à un sous-système d'éclairage (2000, 2010, 2020), une interface de sous-système respective (1100, 1101, 1102) étant connectée au sous-système d'éclairage respectif (2000, 2010, 2020) par l'intermédiaire d'une liaison respective (4000), le dispositif de commande central (1000) comportant des fréquences candidates, les fréquences candidates étant des fréquences potentiellement utilisables en tant que fréquence de canal de communication ;
le sous-système d'éclairage respectif (1000) comprenant un ou plusieurs participants (3000), tels qu'un luminaire ou un autre dispositif électronique, le ou les participants (3000) étant chacun connectés au dispositif de commande central (1000), pourvu de l'interface de sous-système respective (1100, 1101, 1102), par l'intermédiaire de la liaison respective (4000), et le ou les participants (3000) étant chacun configurés pour recevoir du dispositif de commande central (1000) et envoyer à celui-ci des signaux de communication par l'intermédiaire de la liaison respective (4000) ;
le procédé comprenant les étapes suivantes, exécutées par le dispositif de commande central (1000), consistant à :
a) sélectionner (S1010) au moins deux fréquences candidates ;
b) utiliser (S1020) une première fréquence candidate ;
c) transmettre (S1030), à la fréquence respective, un signal de requête au sous-système d'éclairage respectif (2000, 2010, 2020) par l'intermédiaire de l'interface de sous-système respective (1100, 1101, 1102) ;
d) attendre (S1040), pendant une période d'attente prédéterminée, des signaux de retour provenant du ou des participants (3000) du sous-système d'éclairage respectif (2000, 2010, 2020) ;
e) après avoir attendu (S1040) pendant la période d'attente prédéterminée :
évaluer (S1050) les signaux de retour reçus au regard des critères suivants : nombre de participants ayant renvoyé un signal de retour et qualité de transmission ;
f) changer (S1070) la fréquence respective et utiliser une autre fréquence candidate ;
g) répéter (S1075) les étapes c) à f) du procédé relativement à la fréquence candidate respectivement utilisée, puis successivement avec chacune des autres fréquences candidates restantes ;
h) comparer (S1080) les évaluations individuelles obtenues à partir des signaux de retour reçus pour chaque fréquence candidate ;
i) sélectionner (S1090), en tant que fréquence de canal de communication, la fréquence candidate pour laquelle le plus grand nombre de signaux de retour renvoyés par le ou les participants respectifs (3000) a été reçu, la fréquence présentant la meilleure qualité de transmission étant sélectionnée lorsque le nombre de signaux de retour reçus est identique.

2. Procédé de détermination d'une fréquence de canal de communication selon la revendication 1,
dans lequel, après la sélection de la fréquence de canal de communication, la fréquence de canal de communication sélectionnée est communiquée par le dispositif de commande central (1000) au ou aux participants (3000) du sous-système d'éclairage respectif (2000, 2010, 2020) par l'intermédiaire de l'interface de sous-système respective (1100, 1101, 1102).

3. Procédé de détermination d'une fréquence de canal de communication selon la revendication 1 ou 2,
dans lequel les signaux de retour renvoyés par le ou les participants (3000) du sous-système d'éclairage respectif (2000, 2010, 2020) contiennent des informations relatives à l'identité du participant respectif (3000) et/ou des informations relatives au signal de requête, lesquelles permettent une évaluation d'une qualité de signal du signal de requête reçu.

4. Procédé de détermination d'une fréquence de canal de communication selon l'une quelconque des revendications précédentes,
dans lequel, après l'évaluation des signaux de retour reçus, l'étape supplémentaire du procédé consistant à :
- mémoriser (S1060) l'évaluation obtenue à partir des signaux de retour reçus pour la fréquence candidate respectivement utilisée ;
est exécutée.

5. Procédé de détermination d'une fréquence de canal de communication selon l'une quelconque des revendications précédentes,
dans lequel trois fréquences candidates sont préenregistrées dans le dispositif de commande central (1000), de préférence dans une unité de mémoire (1300) du dispositif de commande central (1000),
dans lequel, de manière davantage préférée, ces trois fréquences candidates sont sélectionnées à l'étape a) du procédé.

6. Procédé de détermination d'une fréquence de canal de communication selon l'une quelconque des revendications précédentes,
dans lequel le dispositif de commande central (1000) comporte une intelligence interne (1200) configurée pour exécuter et/ou déclencher le procédé de détermination d'une fréquence de canal de communication.

7. Procédé de détermination d'une fréquence de canal de communication selon l'une quelconque des revendications précédentes,
dans lequel l'au moins une interface de sous-système (1100, 1101, 1102) est configurée pour fournir une tension d'alimentation à l'au moins un sous-système d'éclairage connecté (2000, 2010, 2020), le dispositif de commande central (1000) étant en outre, de préférence, configuré pour communiquer avec l'au moins un sous-système d'éclairage connecté (2000, 2010, 2020) par communication par courant porteur en ligne, PLC, en modulant des signaux de communication respectifs sur l'alimentation fournie.

8. Procédé de détermination d'une fréquence de canal de communication selon l'une quelconque des revendications précédentes,
dans lequel, lorsqu'une fréquence candidate présentant une faible qualité de transmission est sélectionnée, le dispositif de commande central (1000) passe dans un mode de compensation d'une faible qualité de transmission, dans lequel d'autres signaux de communication envoyés entre le dispositif de commande central (1000) et le sous-système d'éclairage respectif (2000, 2010, 2020) sont envoyés plusieurs fois.

9. Dispositif de commande central (1000) destiné à commander un ou plusieurs participants (3000) d'un sous-système d'éclairage (2000, 2010, 2020), le dispositif de commande central (1000) comprenant au moins une interface de sous-système (1100, 1101, 1102) destinée à être connectée à au moins un sous-système d'éclairage (2000, 2010, 2020), une interface de sous-système respective (1100, 1101, 1102) étant connectée à un sous-système d'éclairage respectif (2000, 2010, 2020) par l'intermédiaire d'une liaison respective (4000),
le dispositif de commande central (1000) comportant des fréquences candidates, les fréquences candidates étant des fréquences potentiellement utilisables en tant que fréquence de canal de communication,
le dispositif de commande central (1000) étant conçu pour déterminer une fréquence de canal de communication devant être utilisée pour communiquer avec le ou les participants (3000) du sous-système d'éclairage respectif (2000, 2010, 2020) en exécutant le procédé de détermination d'une fréquence de canal de communication selon l'une quelconque des revendications précédentes.

10. Dispositif de commande central selon la revendication 9,
dans lequel le dispositif de commande central (1000) est configuré pour effectuer individuellement la détermination de la fréquence de canal de communication pour chacun des sous-systèmes d'éclairage connectés respectifs (2000, 2010, 2020).

11. Dispositif de commande central selon la revendication 9 ou 10,
dans lequel le dispositif de commande central (1000) comprend en outre :
- une intelligence interne (1200) destinée à évaluer des signaux de communication reçus par l'intermédiaire de l'au moins une interface de sous-système (1100, 1101, 1102) et à générer des signaux de communication destinés à être transmis par l'intermédiaire de l'au moins une interface de sous-système (1100, 1101, 1102) ;
la détermination de la fréquence de canal de communication étant de préférence effectuée par l'intelligence interne (1200).

12. Dispositif de commande central selon la revendication 11,
dans lequel le dispositif de commande central (1000) comprend :
- une unité de mémoire (1300) destinée à mémoriser des données reçues de l'intelligence interne (1200),
les fréquences candidates du dispositif de commande central (1000) étant de préférence mémorisées dans l'unité de mémoire (1300).

13. Dispositif de commande central selon l'une quelconque des revendications 9 à 12,
dans lequel le dispositif de commande central (1000) comprend en outre :
- un port d'alimentation électrique (1900) destiné à connecter le dispositif de commande central (1000) à au moins une alimentation électrique (5000), l'alimentation électrique étant une alimentation secteur en courant alternatif et/ou une alimentation en courant continu, telle qu'un dispositif de stockage d'énergie électrique de secours ;
dans lequel la puissance reçue par l'intermédiaire du port d'alimentation électrique (1900) est de préférence également utilisée pour alimenter en puissance l'au moins un sous-système d'éclairage connecté (2000, 2010, 2020) par l'intermédiaire de l'au moins une interface de sous-système (1100, 1101, 1102).

14. Dispositif de commande central selon l'une quelconque des revendications 9 à 13,
dans lequel la communication entre le dispositif de commande central (1000) et l'au moins un sous-système d'éclairage connecté (2000, 2010, 2020) est effectuée par communication par courant porteur en ligne, PLC, en modulant des signaux de communication respectifs sur l'alimentation fournie.

15. Système d'éclairage comprenant :
- le dispositif de commande central (1000) selon l'une quelconque des revendications 9 à 14 ;
- au moins un sous-système d'éclairage (2000, 2010, 2020), connecté à une interface de sous-système respective (1100, 1101, 1102) du dispositif de commande central (1000) par l'intermédiaire d'une liaison respective (4000), l'au moins un sous-système d'éclairage (2000, 2010, 2020) comprenant un ou plusieurs participants (3000), tels qu'un luminaire ou un autre dispositif électronique,
le dispositif de commande central (1000) étant configuré pour déterminer, de préférence individuellement et indépendamment, pour chacun de l'au moins un sous-système d'éclairage (2000, 2010, 2020) connecté au dispositif de commande central (1000), la fréquence de canal de communication devant être utilisée conformément à l'une quelconque des revendications 1 à 8.
